# EUROPEAN PATENT APPLICATION

(11) **EP 1 879 391 A1**
(43) Date of publication of application: **16.01.2008**
(21) Application number: 06731182.9
(22) Date of filing: 05.04.2006
(51) Int. Cl.: H04N 7/173

(54) **CONTENTS DISTRIBUTION SYSTEM, AND CONTENTS DISTRIBUTION METHOD**

(30) Priority: 07.04.2005 JP 2005110797
(71) Applicant: Softbank BB Corp., Tokyo 105-7304 (JP)
(72) Inventor: SON, Masayoshi, / (JP)
(74) Representative: Grünecker, Kinkeldey, Stockmair & Schwanhäusser Anwaltssozietät
(86) International application number: PCT/JP2006/307234
(87) International publication number: WO 2006/109651

(57) **Abstract**

Contents are distributed through wireless or wired communication means by storing plural pieces of contents data in advance in a content accumulation unit, by weighting the individual pieces of contents data stored in that content accumulation unit, in accordance with their attributes, by selecting the contents data from the content accumulation unit in accordance with that weighting, and by assigning the contents data selected, to a channel on the communication means. When the multichannel is proceeded in the internet TV or cable TV system, it is possible to improve the conveniences of the user for the channel selection and to practice the contents reuse effectively on the contents supplier side.

## Description

### Technical Field

The present invention relates to a content distribution system and a content distribution method for effectively distributing content through multichannel broadcasts such as Internet televisions and cable televisions.

### Background Art

With the recent advances in the communication technology, Internet televisions and CATV broadcasts have been distributing a number of content pieces such as a variety of TV programs, movies, a variety of information through broadband carriers such as ADSL (Asymmetric Digital Scriber Line), coaxial cable, optical fiber cables and the like.

Patent Document 1 discloses one example of techniques for realizing a multichannel environment and the distribution of high resolution images. In accordance with the technique disclosed in this Patent Document 1, except the upload band used for the Internet and part of the download band used for television reception, the available frequency band of CATV is used for distributing a variety of content, i.e., movies and others. In this case, by MPEG-2 compressing the respective content pieces for distribution through the download band, it is possible to distribute an immense number of content pieces, for example, through about 1000 channels at a very low cost as compared to the case that a communication satellite is utilized.

However, if the number of channels is increased, for example, over 1000 channels as described above, the user has to search such an immense number of channels for a desired channel, and thereby he may face difficulty in the search. Also, on the content distributing side, it is difficult from the view point of costs to provide new content on a routine basis for 1000 channels. Furthermore, there is no need for preparing anew all the content for 1000 channels. Taking into consideration the balance for the user's needs, it is effective to examine how to reuse content.

### DISCLOSURE OF THE INVENTION

Accordingly, taking into consideration the above circumstances, it is an object of the present invention to provide a content distribution system and a content distribution method in which, when advancing the multichannel environment for the internet TV or cable TV system, it is possible to improve the conveniences of the user for selecting a channel and to practice the content reuse effectively on the contents supplier side.

In order to accomplish the object as described above, according to the present invention, while a plurality of content pieces are accumulated in a content accumulation unit in advance, content pieces are distributed through a wireless or wired communication medium by assigning weighting factors respectively to the content pieces accumulated in the content accumulation unit in accordance with the attributes of the content pieces, and selecting content pieces from the content accumulation unit in accordance with the weighting factors; and assigning the content pieces as selected to channels of the communication medium.

In accordance with the present invention as described above, content pieces are weighted, for example, in accordance with the categories of the content pieces such as movies, sports and news, the genre of movies, the types of sports, cast and the like attributes, and it is possible to assign the content as selected to appropriate channels in accordance with weighting factors such that each channel is given an individual feature.

According to the invention as described above, it is preferred that content pieces are selected from among the broadcast content pieces which are broadcasted through radio waves and the content pieces which are accumulated in the content accumulation unit. In this case, it is possible to integrate the so-called VOD type streaming distribution and the concurrent streaming for distributing the broadcast content which is being broadcasted.

According to the invention as described above, it is preferred that the content selecting unit selects broadcast content pieces on the basis of a program schedule of the broadcast content pieces. In this case, the attribute of broadcast content pieces can be examined on the basis of the program schedule which can be obtained in advance, and thereby it is possible to determine weighting factors assigned to the content pieces with a higher degree of accuracy.

According to the invention as described above, it is preferred that content pieces are selected with reference to the order of priority which is set up by user operation, and that the content pieces as selected are assigned to a user dedicated channel which is freely set up by the user. In this case, the user dedicated channel can be used to distribute only the programs, in which the preference of the user is reflected, to individually meet the needs of the user.

According to the invention as described above, it is preferred that content pieces are selected with reference to the order of priority which is individually determined for each channel in terms of the attributes; and that the content pieces to be assigned are selected in accordance with the attributes of the channels. In this case, it is possible to decide a theme for each channel, and perform program scheduling in accordance with the theme.

According to the invention as described above, it is preferred that the same content piece can be assigned to a plurality of different channels in the same time slot. Namely, even when considering only one content piece, it is possible to classify this one content piece in various ways from the view point of different cross-sections by setting appropriate attributes. Accordingly, as has been discussed above, one content piece can be used through a plurality of channels by distributing this one content piece through a plurality of channels in the same time slot, resulting in the effective use of content.

### Brief Description Of The Drawings

[Fig. 1] A block diagram showing the overall configuration of a content distribution system in accordance with the embodiment 1.
[Fig. 2] An explanatory view for showing the selection of content pieces and the assignment of channels in a user dedicated channel mode in accordance with the embodiment 1.
[Fig. 3] An explanatory view for showing the selection of content pieces and the assignment of channels in a 1000 channel mode in accordance with the embodiment 1.
[Fig. 4] A view for schematically showing the overall configuration of the content distribution system in accordance with the embodiment 2.

### Best Mode for Carrying Out the Invention

### (Overall Configuration Of Content Distribution System)

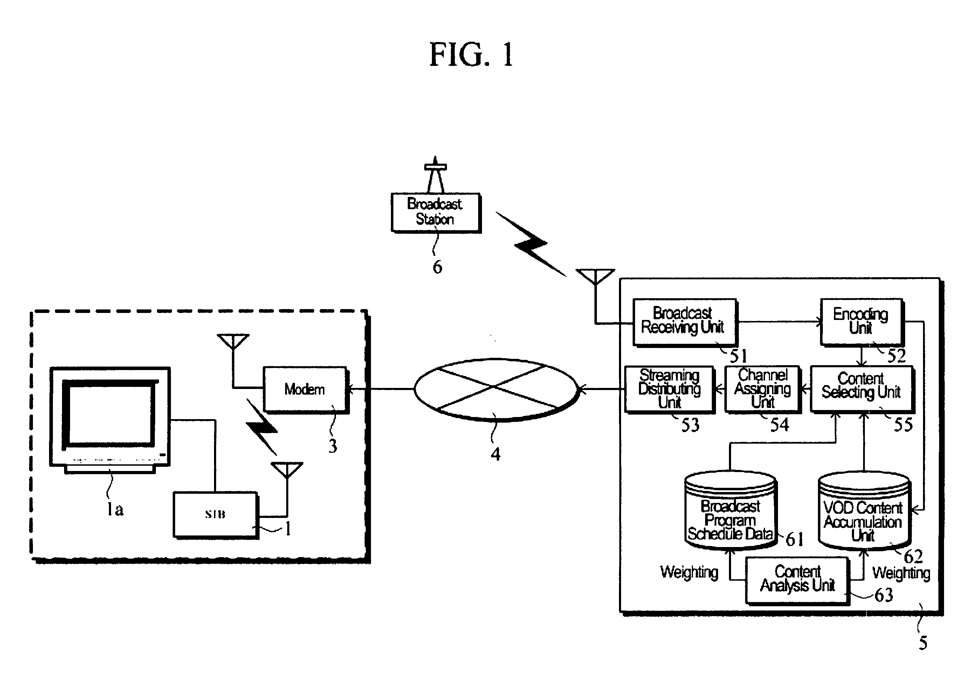

An embodiment of the present invention will be explained in conjunction with drawings. Fig. 1 is a block diagram showing the overall configuration of a content distribution system in accordance with the present embodiment. Incidentally, the term "module" used in the following explanation stands for a function unit capable of performing a predetermined operation and implemented with hardware such as a device or apparatus, software capable of performing the functionality as required, or a combination thereof.

As shown in the same figure, the content distribution system in accordance with the present embodiment is generally composed of a set-top box 1 provided with a monitor 1a, a terminal equipment 3 for connecting to an IP network 4, a broadcast station 6 for broadcasting radio waves, and a content server 5 located in the IP network 4.

The IP network 4 is a distributed communication network which is constructed by connecting a variety of communication lines (telephone line, ISDN line, public network such as ADSL line, dedicated communication line, and radio communication network) to each other by the use of the communication protocol TCP/IP. This IP network 4 may be a LAN such as a home network, an intranet (a network within a company) based on 10BASE-T, 100BASE-TX or the like.

The terminal equipment 3 is an equipment for connecting the set-top box 1 with the IP network 4, and includes a modulator demodulator device such as a modem for converting digital data into a voice signal and vice versa when connecting a telephone line, a signal conversion device such as an ADSL modem for converting an ADSL signal into a LAN signal and vice versa when connecting an ADSL line, a DSU and a terminal adapter which are required for connecting an ISDN line, and so forth.

The set-top box 1 is a receiver apparatus for receiving content distributed through the IP network 4. The monitor 1a is a display device such as a liquid crystal display, a CRT display or a plasma display, and connected to the set-top box 1 to output images and sound which are received through the set-top box 1. Incidentally, in the case of the present embodiment, the terminal equipment 3 and the set-top box 1 are connected through a wireless communication such as a wireless LAN.

The content server 5 is a server computer or software capable of transmitting network content such as HTML (HyperText Markup Language) files, image files, music files and the like as WWW (World Wide Web) documents, and serves to accumulate information such as HTML files and image files and transmit the information in response to a request from client software through the IP network 4 such as the Internet.

More specifically speaking, the content server 5 is provided with a broadcast receiving unit 51, an encoding unit 52, a streaming distributing unit 53, a channel assigning unit 54, a content selecting unit 55, a broadcast program schedule data accumulating unit 61, the content accumulation unit 62 for VOD (Video On Demand), and a content analysis unit 63.

The broadcast program schedule data accumulating unit 61 serves to save, in a data table, the schedule of programs which will be broadcasted from the respective broadcast stations. The data table is used to store the attribute information of the respective programs.

The content accumulation unit 62 is a storage device for accumulating a plurality of content pieces such as image files and sound files together with index data containing the attribute information associated with the respective content pieces. This index data contains weighting factors which are assigned to the content pieces respectively by the content analysis unit 63 in correspondence with the respective attributes thereof.

As shown in table 1, this index data contains, as the attribute information, the file name (address), title, genre, names of cast and so forth of each program, and if an attribute includes items with respect to which the content pieces can be ranked, the items are given weighting factors with respect to the degree. For example, in the case of movies and the like, weighting factors are given as relative values with respect to a variety of parameters such as genre, tendency (action: 8, comedy: 1, ...), or how often each cast member appears (leading actor or supporting actor, total appearing time, and so forth).

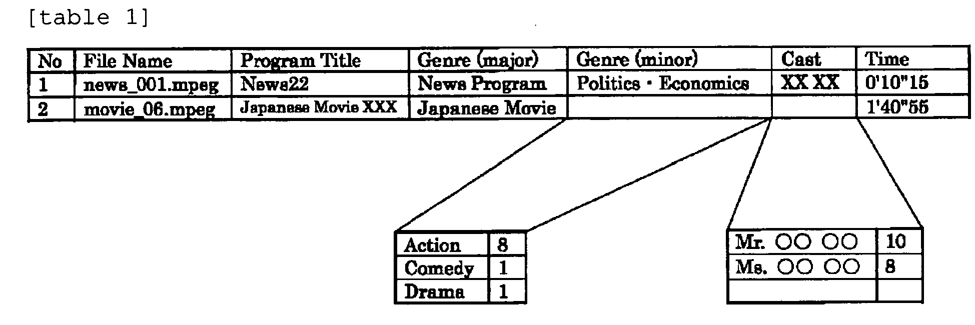

The broadcast receiving unit 51 is a module for receiving broadcast radio waves transmitted from the broadcast station 6, and outputting the radio signal as received to the encoding unit 52. The encoding unit 52 is a module for performing modulation, decoding and compression in order to convert the radio signal as received into streaming data. The content data encoded by this encoding unit 52 is input to the content selecting unit 55, and accumulated in the content accumulation unit 62 as VOD content.

The content selecting unit 55 is a module for selecting content pieces from among the content accumulation unit 62 in accordance with the weight factors assigned to the content pieces, and successively outputting the content pieces as selected to the channel assigning unit 54. Meanwhile, the content selecting unit 55 in accordance with the present embodiment is provided with the functionality of selecting arbitrary content pieces from among the broadcast content pieces received by the broadcast receiving unit 51 and the content pieces accumulated in the content accumulation unit 62, such that it is possible to integrate and distribute the broadcast content and VOD content.

The selection of broadcast content pieces by the content selecting unit 55 is performed on the basis of the program schedule of the broadcast content pieces. More specifically speaking, the broadcast program schedule data accumulating unit 61 stores the data table containing the attribute information of the programs (content) to be broadcasted by the respective broadcast station, for example, the category, genre, cast and the like of each program, and the content analysis unit 63 evaluates the respective parameters, and assigns weighting factors to the respective programs (content).

The channel assigning unit 54 is a module for assigning each content piece selected by the content selecting unit 55 to a channel. Incidentally, this channel is a channel for identifying the content to be displayed in the set-top box 1, and may be a channel defined by frequency division, time division, code division and the like, or the address of the content piece such as an IP address or a URL. Meanwhile, in the case of the present embodiment, the channel assigning unit 54 can assign the same content piece to a plurality of different channels in the same time slot. By this configuration, it is possible to distribute the same content piece through a plurality of channels at the same time, resulting in the effective use of content.

The streaming distributing unit 53 is a module for distributing multimedia data such as images and sound through the network, and when content is viewed on the set-top box 1, the playback is performed while receiving data.

The content analysis unit 63 is a module for performing weighting in accordance with the attributes of each content piece. More specifically speaking, each content piece is weighted as relative evaluation for each attribute by analyzing the content pieces of the content accumulation unit 62 and the program schedule in the broadcast program schedule data accumulating unit 61, and the weighting factors are stored as index data.

### (Assignment to Channels)

There are two modes (user dedicated channel mode and 1000 channel mode), as explained below, in which the above content selecting unit 55 selects content pieces and the channel assigning unit 54 assigns the content pieces to channels.

### (1) User Dedicated Channel Mode

This mode is a mode for scheduling programs for suiting the user's taste in a reflection of the user's preference. More specifically speaking, the content selecting unit 55 searches the index data in accordance with the order of priority which is set up on the basis of the user operation, and selects content with reference to the weighting factors, and the channel assigning unit 54 successively assigns content pieces to the user dedicated channel which is arbitrarily set up by the user.

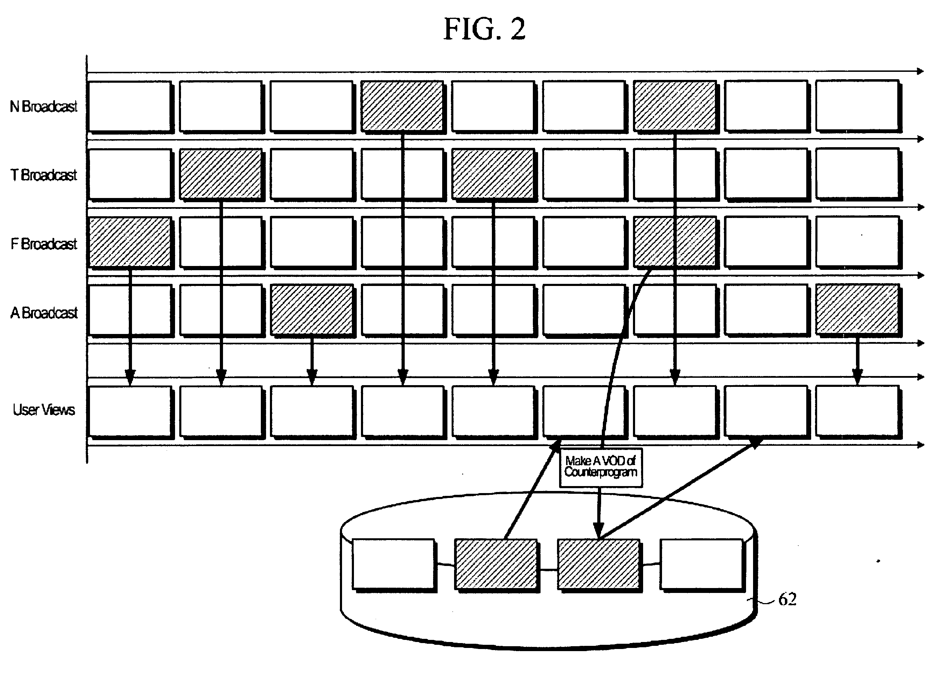

For example, as shown in Fig. 2, when the user desires to view only the programs featuring his favorite personality, the program schedules of the respective broadcast stations (N broadcast to A broadcast) are searched for the programs featuring this personality, which are then assigned to the time slots of the user dedicated channel in correspondence with the broadcast time slots of the respective broadcast stations in which the programs are to be broadcasted.

In this case, if there is a time conflict between two of the programs, one of the conflicting programs having the higher weighting factor (for example, the program in which the personality more frequently appears) is preferentially assigned to the user dedicated channel while the other program is encoded and temporarily accumulated in the content accumulation unit 62 as VOD content and then distributed by assigning it to a free time slot.

In this mode, the user dedicated channel can be used to distribute only the programs, in which the preference of the user is reflected, to individually meet the needs of the user.

### (2) 1000 Channels Mode

In this mode, while the respective channels (for example, 1000 channels) are given attributes such as genre and theme, content pieces are selected in accordance with the attributes. More specifically speaking, the content selecting unit 55 searches the index data in accordance with the order of priority on the basis of the attributes (themes and the like) with which the respective channels are associated, and selects content pieces in accordance with the weighting factors, and the channel assigning unit 54 assigns the content pieces, which are selected by the content selecting unit 55, to the channels in accordance with the attributes.

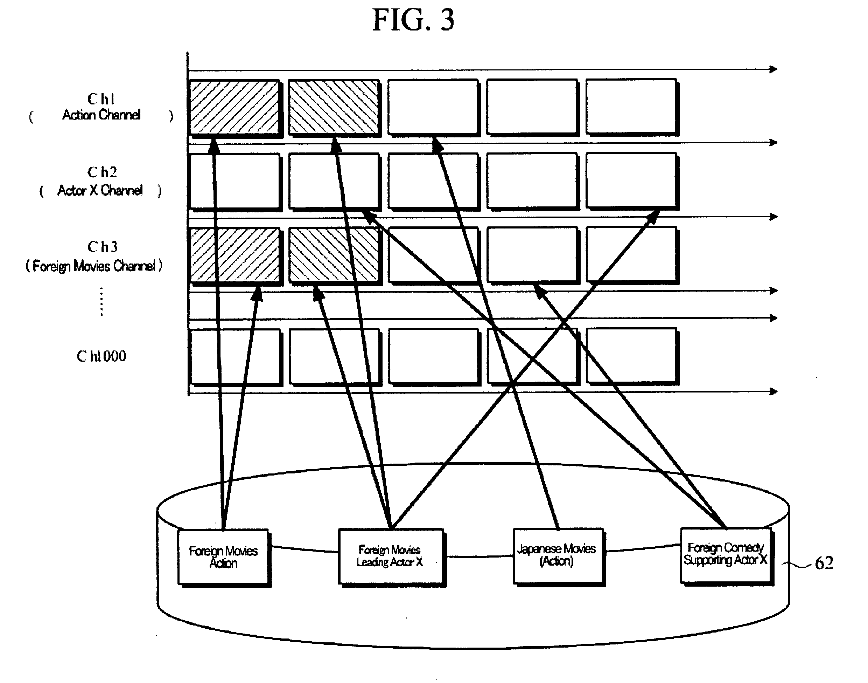

For example, as shown in Fig. 3, the channel 1 is set up to broadcast action-filled movies and dramas, the channel 2 is set up to broadcast only the movies and dramas featuring Actor X, and the channel 3 is set up to broadcast only foreign movies. Then, the above index data is searched on the basis of the features of the respective channels, and the retrieved programs are assigned to the appropriate channels respectively. In this case, even in the case where the same content piece is assigned to the same time slot, streaming distribution is performed in the same time slot.

In accordance with this mode, it is possible to decide a theme for each channel, and perform program scheduling in accordance with the theme, so that the user can easily select a channel and the content provider can promote effective use of content.

### (Effects and Advantages of The Present Embodiment)

In accordance with the system and method of the present embodiment as explained above, content pieces are weighted, for example, in accordance with the categories of the content pieces such as movies, sports and news, the genre of movies, the types of sports, cast and the like attributes, and these attributes can be used to create a user dedicated channel and create a multichannel environment such that each channel is given an individual feature to meet the needs of the user.

Also, in the case of the present embodiment, content pieces are selected and distributed from among the broadcast content pieces broadcasted by radio waves and the content pieces accumulated in the content accumulation unit 62, and thereby it is possible to integrate the so-called VOD type streaming distribution and the concurrent streaming for distributing the broadcast content which is being broadcasted, while improving the user-friendliness and promoting effective use of content.

As a result, in the case of the present embodiment, when advancing the multichannel environment for Internet television, cable television and the like, it is possible to improve the user-friendliness for selecting channels and make effective the reuse of content at the content supplier end.

### [Second Embodiment]

Next, the second embodiment of the present invention will be explained with reference to the accompanying drawings.

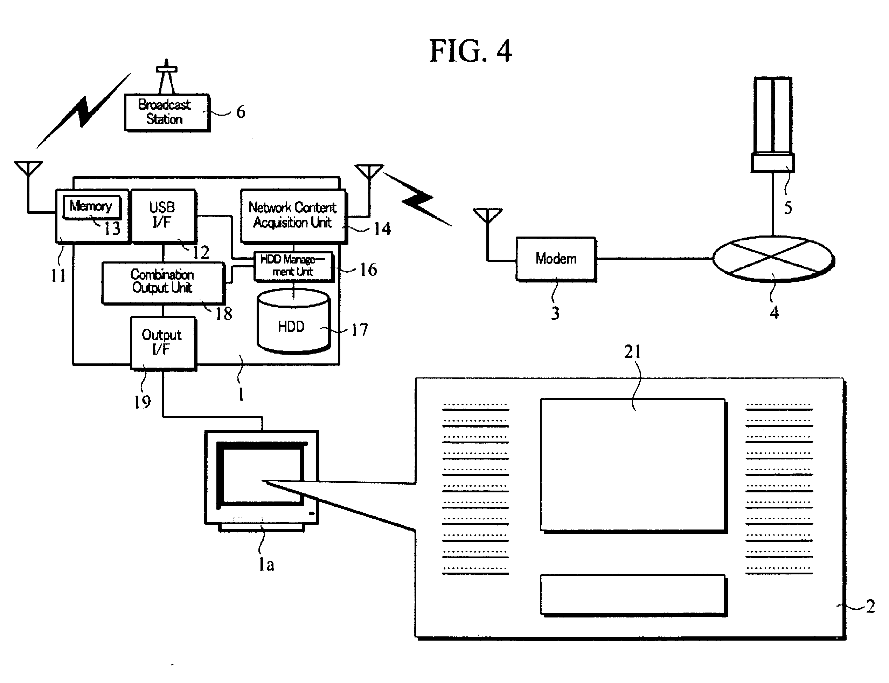

Fig. 4 is a view for schematically showing the configuration of the content distribution system in accordance with the present embodiment. Meanwhile, in the description of the present embodiment, like reference numbers indicate functionally similar elements as the above first embodiment unless otherwise specified, and therefore no redundant description is repeated.

In the case of the first embodiment as described above, the broadcast content and VOD content are integrated in the content server 5. However, the present embodiment is characterized in that the broadcast content and VOD content are combined on the user side.

More specifically speaking, the set-top box 1 is provided with a tuner unit 11 with which broadcast content can be received via radio waves, a USB interface 12 which is a connection interface of the tuner unit 11, a network content acquisition unit 14 for acquiring network content, which is distributed through the IP network 4, by the terminal equipment 3, a combination output unit 18 for switching between (or combining together) the network content and the broadcast content and outputting it to the monitor 1a through an output interface (I/F) 19, a hard disk management unit 16 for recording the network content and the broadcast content, and a hard disk drive 17.

The tuner unit 11 is a circuit for providing a so-called tuner function capable of receiving broadcast signals, modulating these received radio wave signals, converting these signals into predetermined digital signals, and outputting the predetermined digital signals, and makes it possible to receive the broadcast content on either channel of ground wave broadcasts, satellite broadcasts, cable TV broadcasts, radio broadcasts and the like by changing the frequency. Also, the received signal of this tuner unit 11 is output to the combination output unit 18, and also can be recorded in the hard disk by the hard disk management unit 16.

Incidentally, while the tuner unit 11 receives radio waves through an antenna which is incorporated in (or attached to) the circuit thereof, it is also possible for example to provide a television antenna connection terminal so that the tuner unit 11 receives broadcast signals through a coaxial cable and the like which connects it with another antenna equipment. Also, in the case of the present embodiment, this tuner unit 11 is an adapter device which is provided with an interface in conformity with a data transmission standard such as USB and detachably attached to a USB interface (USB terminal) 12 of the set-top box 1.

Furthermore, this tuner unit 11 is provided with a memory 13 in which an identifier (user ID) used to identify the user is stored. Then, the authentication of the user is performed by inserting this tuner unit 11 into the set-top box 1, reading the user ID from the memory 13 and transmitting the user ID to the server 5. The result of authentication is used to determine whether or not the service is provided, limit the available service, perform the charging process, and so forth.

The network content acquisition unit 14 is a module for receiving network content such as motion picture distribution and HTML files as described above through the terminal equipment 3 by the use of a communication protocol such as TCP/IP.
This network content acquisition section 14 is provided with a communication interface which is implemented as a wired interface for communicating with the terminal equipment 3, or a wireless interface such as a LAN card in conformity with a wireless LAN standard such as IEEE802.11b.

In the case of the present embodiment, the combination output unit 18 is provided with the functionality of invoking and running browser software which is run in the set-top box 1, and the browser software downloads HTML (HyperText Markup Language) files, image files, music files and the like distributed from the content server 5 located on the IP network 4, parses the layout to display and play back them, browses a Web page 2, and combines and outputs broadcast content and network content (images and motion pictures) within the Web page 2. More specifically speaking, the tabs included in a Web page (HTML file) distributed by the content server 5 are parsed to produce the television screen 21, in which images and motion pictures (broadcast content or network content) are inserted, and combine a video or the like content (broadcast content or network content) in this screen.

Also, the combination output unit 18 is provided with the functionality of outputting broadcast content and network content assigned to a channel on the monitor 1a on the basis of a switching control signal acquired from the channel assigning unit 54 of the content server 5. Meanwhile, with respect to the broadcast content received by the set-top box 1, the channel assigning unit 54 of the present embodiment transmits only a control signal, which indicates the assignment of the broadcast content to the time slot, to the set-top box 1, while the content selecting unit 55 transmits a blank signal. The combination output section 18 replaces the blank signal with the broadcast content received by the tuner unit 11 for combination during the time the blank signal is transmitting.

In accordance with the present embodiment, since broadcast content and VOD content (network content) are combined, it is possible to make view settings while giving priority to the improvement of the reception environment on the user side. As a result, also in the case of the present embodiment, when advancing the multichannel environment for Internet television, cable television and the like, it is possible to improve the user-friendliness for selecting channels and make effective the reuse of content at the content supplier end.

### Industrial Applicability

As has been discussed above, in accordance with the present invention, when advancing the multichannel environment for Internet television, cable television and the like, it is possible to improve the user-friendliness for selecting channels and make effective the reuse of content at the content supplier end.

## Claims

1. A content distribution system for distributing content through a wireless or wired communication medium comprising:
a content accumulation unit operable to accumulate a plurality of content pieces;
a content analysis unit operable to assign weighting factors respectively to said content pieces accumulated in said content accumulation unit in accordance with the attributes of said content pieces;
a content selecting unit operable to select content pieces from among said content pieces accumulated in said content accumulation unit in accordance with the weighting factors assigned to said content pieces; and
a channel assigning unit operable to assign the content pieces selected by said content selecting unit to channels of said communication medium.

2. The content distribution system as claimed in claim 1 further comprising a broadcast receiving unit operable to receive broadcast content pieces which are broadcasted through radio waves, wherein
said content selecting unit selects content pieces from among the broadcast content pieces which are received by said broadcast receiving unit and the content pieces which are accumulated in said content accumulation unit.

3. The content distribution system as claimed in claim 2 wherein said content selecting unit selects broadcast content pieces on the basis of a program schedule of the broadcast content pieces.

4. The content distribution system as claimed in claim 1 wherein said content selecting unit selects content pieces in accordance with said weighting factors with reference to the order of priority which is set up by user operation, and wherein said channel assigning unit assigns the content pieces selected by said content selecting unit to a user dedicated channel which is freely set up by the user.

5. The content distribution system as claimed in claim 1 wherein said content selecting unit selects content pieces in accordance with said weighting factors with reference to the order of priority which is individually determined for each channel in terms of the attributes, and
wherein said channel assigning unit assigns the content pieces selected by said content selecting unit to the channels in accordance with the attributes of the channels.

6. The content distribution system as claimed in claim 5 wherein said channel assigning unit is capable of assigning the same content piece to a plurality of different channels in the same time slot.

7. A content distribution method for distributing content through a wireless or wired communication medium, wherein a plurality of content pieces are accumulated in a content accumulation unit in advance, said content distribution method comprising:
a step (1) of assigning weighting factors respectively to said content pieces accumulated in said content accumulation unit in accordance with the attributes of said content pieces, and selecting content pieces from said content accumulation unit in accordance with the weighting factors; and
a step (2) of assigning the content pieces selected in said step (1) to channels of said communication medium.

8. The content distribution method as claimed in claim 7 wherein content pieces are selected from among the broadcast content pieces which are broadcasted through radio waves and the content pieces which are accumulated in said content accumulation unit.

9. The content distribution method as claimed in claim 8 wherein broadcast content pieces are selected on the basis of a program schedule of the broadcast content pieces.

10. The content distribution method as claimed in claim 7 wherein
in said step (1), content pieces are selected in accordance with said weighting factors with reference to the order of priority which is set up by user operation, and wherein
in said step (2), the content pieces selected in said step (1) are assigned to a user dedicated channel which is freely set up by the user.

11. The content distribution method as claimed in claim 7 wherein
in said step (1), content pieces are selected in accordance with said weighting factors with reference to the order of priority which is individually determined for each channel in terms of the attributes; and wherein
in said step (2), the content pieces to be assigned are selected in accordance with the attributes of the channels.

12. The content distribution method as claimed in claim 11 wherein the same content piece can be assigned to a plurality of different channels in the same time slot.
